# EUROPEAN PATENT SPECIFICATION

(11) **EP 1 538 036 B1**
(45) Date of publication and mention of the grant of the patent: **04.10.2006**
(21) Application number: 04028347.5
(22) Date of filing: 30.11.2004
(51) Int. Cl.: B60R 25/00, B60R 25/04, G07C 9/00, E05B 65/12, H04B 5/00, H01Q 1/32, G06F 7/04

(54) **Passive keyless entry device**
Passive schlüssellose Zugangsvorrichtung
Dispositif d'entrée passif sans clé

(30) Priority: 04.12.2003 JP 2003406092
(43) Date of publication of application: 08.06.2005
(73) Proprietor: ALPS ELECTRIC CO., LTD., Tokyo (JP)
(72) Inventor: Masudaya, Hideki, Ota-ku, Tokyo (JP)
(74) Representative: Hirsch, Peter

(56) References cited:
- EP-A- 0 775 792
- US-A1- 2003 222 756
- PATENT ABSTRACTS OF JAPAN vol. 1998, no. 13, 30 November 1998 (1998-11-30) -& JP 10 224276 A (NIPPON SOKEN INC; DENSO CORP), 21 August 1998 (1998-08-21)

## Description

### BACKGROUND OF THE INVENTION

### 1. Field of the Invention

The present invention relates to a passive keyless entry as described in document JP 10224276 and according to the preamble of claim 1 device including a vehicle-mounted transceiver and a portable transceiver, and more particularly, to a passive keyless entry device for increasing a transmission speed of a low frequency signal by shortening a transmission end time of point of the low frequency signal when the low frequency signal is transmitted from a low frequency antenna composed of an LC resonance circuit of the vehicle-mounted transceiver to the portable transceiver.

### 2. Description of the Related Art

In recent years, for a mobile vehicle such as a car, there have been many cases where a passive keyless entry device is mounted on the mobile vehicle in order to prevent the mobile vehicle from being stolen or broken while the mobile vehicle is not driven. Such a passive keyless entry device includes a vehicle-mounted transceiver mounted on the mobile vehicle, and at least one portable transceiver carried by a driver of the mobile vehicle. When a driver drives his own mobile vehicle, he cannot open/close a door of the mobile vehicle or starts an engine of the mobile vehicle if he does not carry a portable transceiver, which is registered in his own mobile vehicle.

In operation of the passive keyless entry device, when the driver or an authorized person carrying the portable transceiver registered in the mobile vehicle approaches the mobile vehicle, the portable transceiver receives a low frequency radio signal including a wakeup signal transmitted from the vehicle-mounted transceiver. Then, the portable transceiver transmits a high frequency radio signal including a command signal to the vehicle-mounted transceiver in response to the low frequency radio signal. When the vehicle-mounted transceiver receives the transmitted high frequency radio signal, it performs a control according to the command signal included in the high frequency radio signal such that the driver opens the door of the mobile vehicle or start the engine of the mobile vehicle to drive the mobile vehicle.

In such a series of operation, as known in the art, for transmission of the low frequency signal to the portable transceiver, the vehicle-mounted transceiver uses two half-bridge circuits, each of which is composed of a pair of FETs, as a low frequency transmission circuit, and has a low frequency antenna to form an LC resonance circuit between an output terminal of one of the two half-bridge circuits and an output terminal of the other of the two half-bridge circuits.

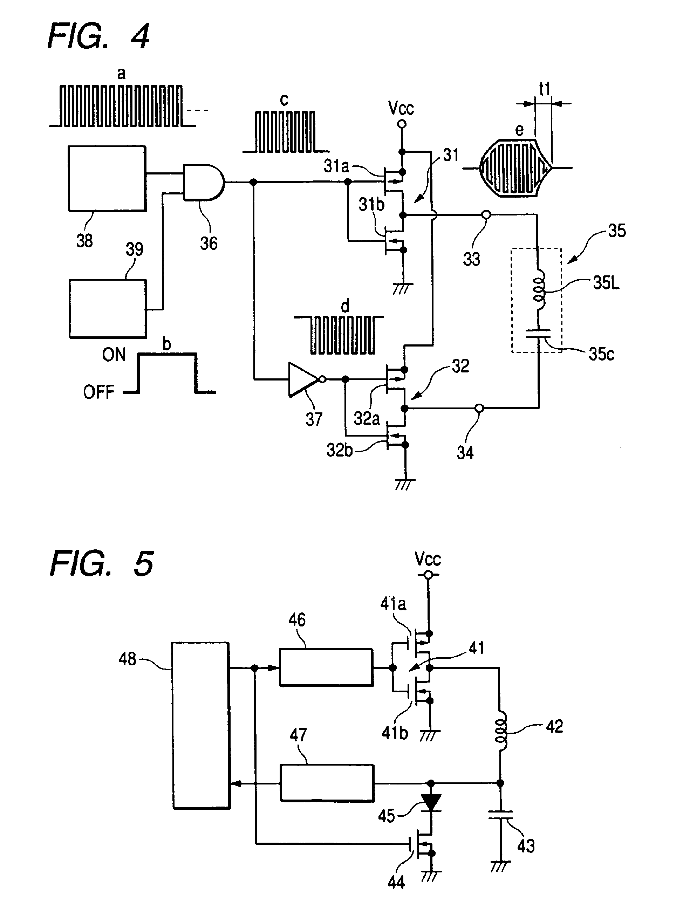

Fig. 4 is a circuit diagram illustrating an example of a conventional low frequency transmission circuit.

Referring to Fig. 4, the low frequency transmission circuit includes a first half-bridge circuit 31 having a pair of FETs 31a and 31b connected in series between a power supply Vcc and a ground point, a second half-bridge circuit 32 having a pair of FETs 32a and 32b connected in series between the power supply Vcc and the ground point, a low frequency antenna 35 to form an LC resonance circuit by an inductor 35L and a capacitor 35C, which are connected between an output terminal 33 of the first half-bridge circuit 31 and an output terminal 34 of the second half-bridge circuit 32, an AND gate 36 having its output terminal connected to a common gate electrode of the pair of FETs 31a and 31b, and an inverter 37 connected between a common gate electrode of the pair of FETs 32a and 32b and the output terminal of the AND gate 36. The AND gate 36 has one input terminal connected to an output terminal of a clock signal (carrier signal composed of a rectangular wave) generating circuit 38 and the other input terminal connected to an output terminal of a control signal (modulation signal) generating circuit 39. In this case, the clock signal generating circuit 38 generates a clock signal (carrier signal) a having a frequency of 125 KHz and the control signal generating circuit 39 generates a control signal (modulation signal) b having two values of a frequency of several KHz.

Operation of the low frequency transmission circuit having the above-mentioned structure is as follows. When the clock signal generated by the clock signal generating circuit 38 is input to the one input terminal of the AND gate 36 and the control signal generated by the control signal generating circuit 39 is input to the other input terminal of the AND gate 36, the AND gate 36 outputs the clock signal when the control signal having the two values has a positive polarity, and an output of the clock signal from the AND gate 36 is blocked and a modulation signal c is output from the output terminal of the AND gate 36 when the control signal has a negative polarity. The modulation signal c is supplied to the first half-bridge circuit 31 via the common gate electrode of the pair of FETs 31a and 31b, and simultaneously, is supplied to an input terminal of the inverter 37. The inverter 37 inverts the polarity of the supplied modulation signal c and outputs an inverted modulation signal d through its output terminal. The inverted modulation signal d is supplied to the second half-bridge circuit 32 via the common gate electrode of the pair of FETs 32a and 32b. The first half-bridge circuit 31 amplifies the supplied modulation signal c and supplies the amplified modulation signal to one end of the low frequency antenna 35 via the output terminal 33. The second half-bridge circuit 32 amplifies the supplied inverted modulation signal d and supplies the amplified inverted modulation signal to the other end of the low frequency antenna 35 via the output terminal 34. The low frequency antenna 35 generates a bipolar modulation signal e by the modulation signal and the inverted modulation signal supplied to both ends of the low frequency antenna 35 and transmits a low frequency signal corresponding to the bipolar modulation signal e.

In this case, the low frequency antenna 35 used in the above-mentioned low frequency transmission circuit is typically set such that Q of the LC resonance circuit composed of the inductor 35L and the capacitor 35C becomes large in order to transmit a low frequency signal having large amplitude.

However, although the low frequency antenna 35 having the LC resonance circuit can transmit the low frequency signal having large amplitude when it is set such that Q of the LC resonance circuit composed of the inductor 35L and the capacitor 35C becomes large, a time constant of the LC resonance circuit also becomes large with the increase of Q. Accordingly, each of the duration of a falling edge of a positive polarity and the duration of a rising edge of a negative polarity at an end point of time of the bipolar modulation signal e becomes long. That is, a transmission end point of time is later by t1 than an original transmission end point of time, i.e., a supply stop point of time (a point of time when the positive polarity is changed to the negative polarity) of the control signal. This is because the time constant τ = 2Q/ω (ω=2πf) using Q of the LC resonance circuit. Also, when the transmission end point of time of the bipolar modulation signal e becomes late, an interval between a transmission end point of time of the bipolar modulation signal e transmitted previously and a transmission start point of time of the bipolar modulation signal e transmitted subsequently becomes shortened. This results in increasing a possibility of a read error when the portable transceiver receives and reads such a low frequency signal. In this case, in order to prevent such a read error from being generating, if the interval between the transmission end point of time of the bipolar modulation signal e transmitted previously and the transmission start point of time of the bipolar modulation signal e transmitted subsequently is changed to become lengthened, a transmission speed of the low frequency signal is lowered by the lengthened interval, which results in undesired deterioration of transmission efficiency.

For the purpose of avoiding such undesired deterioration of transmission efficiency, Japanese Unexamined Patent Application Publication No. 10-224276 discloses an automatic recognition device (corresponding to the low frequency transmission circuit) for clearly defining an interval between a transmission end point of time of one transmission signal and a transmission start point of time of another transmission signal by emitting residual oscillation energy of the LC resonance circuit through an additional discharging path whenever series resonance of the LC resonance circuit is stopped and stopping the emission of the residual oscillation energy before next series resonance of the LC resonance circuit starts, when the low frequency signal is transmitted from the low frequency antenna having the LC resonance circuit.

Fig. 5 is a circuit diagram illustrating essential elements of the automatic recognition device disclosed in Japanese Unexamined Patent Application Publication No. 10-224276.

Referring to Fig. 5, the automatic recognition device includes a half-bridge circuit 41 having a pair of FETs 41a and 41b connected in series between a power supply Vcc and a ground point, a low frequency antenna 42 and a capacitor 43 to form an LC resonance circuit connected in series between an output terminal of the half-bridge circuit 41 and the ground point, a FET 44 and a diode 45 connected in series between the ground point and a junction point between the low frequency antenna 42 and the capacitor 43, a transmission circuit 46 having its output terminal connected to a common gate electrode of the pair of FETs 41a and 41b, a demodulation circuit 47 having its input terminal connected to the junction point between the low frequency antenna 42 and the capacitor 43, and a control circuit 48 having its output terminal connected to an input terminal of the transmission circuit 46 and a gate electrode of FET 44 and its input terminal connected to an output terminal of the demodulation circuit 47.

In this case, the control circuit 48 generates a control signal having two values, which consist of an output level of a negative polarity and a stop level of a positive polarity and supplies the generated control signal having the two values to the transmission circuit 46 and the FET 44 through the output terminal of the control circuit 48. When the supplied control signal having the two values has the output level of the negative polarity, the transmission circuit 46 outputs a clock signal having a frequency higher than a frequency of the control signal. When the supplied control signal having the two values has the stop level of the positive polarity, the transmission circuit 46 generates a transmission signal, with the output of the clock signal stopped, and supplies the transmission signal to the common gate electrode of the pair of FETs 41a and 41b.

Operation of the automatic recognition device having the above-mentioned structure is as follows. While the control signal having the two values supplied to the transmission circuit 46 has the output level of the negative polarity, the transmission circuit 46 outputs the clock signal and supplies it to the subsequent half-bridge circuit 41. The half-bridge circuit 41 amplifies the supplied clock signal and supplies the amplified clock signal to the low frequency antenna 42 through the output terminal of the half-bridge circuit 41. Since the low frequency antenna 42 together with the capacitor 43 forms the LC resonance circuit having the frequency of the clock signal as a resonance frequency, the clock signal supplied to the low frequency antenna 42 has large amplitude, and accordingly, a low frequency signal is transmitted from the low frequency antenna 42. While the control signal having the two values supplied to the transmission circuit 46 has the output level of the negative polarity, since the control signal having the two values supplied to the FET 44 also has the output level of the negative polarity, the FET 44 is turned off and accordingly has no effect on the transmission operation of the low frequency signal by the low frequency antenna 42.

Next, when the level of the control signal having the two values is changed from the output level of the negative polarity to the stop level of the positive polarity, the transmission circuit 46 stops the output of the clock signal such that the clock signal is not supplied to the half-bridge circuit 41. At this time, the half-bridge circuit 41 stops supplying the amplified clock signal to the low frequency antenna 42. Ideally, when the supply of the clock signal to the low frequency antenna 42 is stopped, the transmission of the low frequency signal from the low frequency antenna 42 is immediately stopped. However, since the LC resonance circuit including the low frequency antenna 42 has residual oscillation energy of the clock signal frequency even when the supply of the clock signal is stopped, the transmission of the low frequency signal from the low frequency antenna 42 lasts for a while. However, in this automatic recognition device, when the supply of the clock signal is stopped, since the level of the control signal having the two values supplied to the FET 44 is changed to the stop level of the positive polarity, the FET 44 is turned on, the diode 45 is also turned on due to the residual oscillation energy of the LC resonance circuit, and accordingly, the residual oscillation energy of the LC resonance circuit is emitted to the ground point through the FET 44 and the diode 45. Accordingly, since the transmission of the low frequency signal from the low frequency antenna 42 is stopped in a short time and an interval between a transmission end point of time of one transmission signal and a transmission start point of time of next transmission signal can be clearly recognized, the automatic recognition device can be attained without lowering the transmission speed of the transmission signal and without deteriorating the transmission efficiency of the transmission signal.

Although the disclosed automatic recognition device has an advantage in that the transmission speed of the transmission signal is not lowered and the transmission efficiency of the transmission signal is not deteriorated, it has a problem in that wiring becomes complicated because the junction point between the low frequency antenna 42 and the capacitor 43 is connected to the FET 44. Particularly, this problem becomes more serious in a case where the connection is performed by lead lines. Also, since the automatic recognition device changes the level of the control signal having the two values supplied to the FET 44 as the supply of the clock signal is stopped to the stop level of the positive polarity and emits the residual oscillation energy of the LC resonance circuit to the ground point by turning on the FET 44, there is a problem in that the device cannot cope with a case where the level of the control signal having the two values has the output level of the positive polarity or the stop level of the negative polarity. In addition, the automatic recognition device has the configuration that the LC resonance circuit including the low frequency antenna 42 is connected between the output terminal of one half-bridge circuit 41 and the ground point (hereinafter, this configuration is referred to as " asymmetrical low frequency transmission circuit"), however, it does not have a configuration that two half-bridge circuits are employed and the LC resonance circuit including the low frequency antenna is connected to each output terminal of the two half-bridge circuits (hereinafter, this configuration is referred to as " symmetrical low frequency transmission circuit").

### SUMMARY OF THE INVENTION

Accordingly, the present invention has been made to solve the above-mentioned problems, and it is an object of the present invention to provide a passive keyless entry device having a switching means, which is switched on/off by a control signal, connected to a low frequency transmission circuit, so that a transmission speed of a transmission signal is not lowered, a transmission efficiency of the transmission signal is not deteriorated, wiring is not complicated, a degree of freedom of design is increased through a new solution, and more preferably, the device are applicable to a symmetrical low frequency transmission circuit.

In order to achieve the above-mentioned object, there is provided a passive keyless entry device comprising a vehicle-mounted transceiver and a portable transceiver, which is adapted to operate vehicle-mounted devices of a vehicle in which the vehicle-mounted transceiver is installed, the vehicle-mounted transceiver transmitting a low frequency wakeup signal to the portable transceiver, the portable transceiver transmitting a high frequency command signal to control the vehicle-mounted devices in response to receipt of the wakeup signal, the vehicle-mounted transceiver receiving the command signal, wherein the vehicle-mounted transceiver comprises a clock circuit for outputting a clock signal, a control circuit for outputting a control signal, a modulation circuit for modulating the clock signal with the control signal to produce a modulation signal, a transmission circuit driven by the modulation signal for supplying a low frequency signal to a low frequency antenna which forms an LC resonance circuit, and a switching FET having a gate electrode to which the control signal is supplied, the transmission circuit is configured by a half-bridge circuit composed of a pair of FETs having a common gate electrode to which the modulation signal is input, and the low frequency antenna is connected to an output terminal of the half-bridge circuit, and the switching FET is connected in series to a transmission path of the low frequency signal and is switched off when transmission of the low frequency signal is stopped as supply of the control signal is stopped.

In this case, the switching FET is connected between a ground connection electrode of the half-bridge circuit and a ground point.

Further, the switching FET is connected between the output terminal of the half-bridge circuit and one end of the low frequency antenna connected to the output terminal.

Further, another pair of FETs different from the pair of FETs is provided, an inverted modulation signal is input between the common gate electrode of the pair of FETs and a common gate electrode of another pair of FETs, and the low frequency antenna is connected between an output terminal of the pair of FETs and an output terminal of another pair of FETs.

According to the present invention, since the low frequency transmission circuit used for the vehicle-mounted transceiver of the passive keyless entry device is configured by the half-bridge circuit composed of the pair of FETs having the common gate electrode to which the modulation signal is input, the low frequency antenna to form the LC resonance circuit connected to the output terminal of the half-bridge circuit, and the switching FET connected in series to the transmission path of the low frequency signal, the switching FET is switched off at the transmission end point of time of the low frequency signal transmitted from the low frequency antenna, high resistance of the switched-off switching FET is connected in series to the LC resonance circuit including the low frequency antenna, high Q produced by the LC resonance circuit is significantly lowered by the connection of the high resistance of the switched-off switching FET, and the residual oscillation energy of the LC resonance circuit is decreased in a short time. Accordingly, since the transmission of the low frequency signal from the low frequency antenna is stopped in a short time and an interval between a transmission end point of time of one transmission signal and a transmission start point of time of a next transmission signal can be clearly recognized, the passive keyless entry device can be attained without lowering the transmission speed of the transmission signal and without deteriorating the transmission efficiency of the transmission signal.

### BRIEF DESCRIPTION OF THE DRAWINGS

Fig. 1 is a circuit diagram illustrating an embodiment of a low frequency transmission circuit used for a vehicle-mounted transceiver, which relates to the best mode for carrying out a passive keyless entry device, according to the present invention;
Fig. 2 is a circuit diagram illustrating a second embodiment of a low frequency transmission circuit used for a vehicle-mounted transceiver, which relates to another mode for carrying out a passive keyless entry device, according to the present invention;
Fig. 3 is a circuit diagram illustrating a third embodiment of a low frequency transmission circuit used for a vehicle-mounted transceiver, which relates to yet another mode for carrying out a passive keyless entry device, according to the present invention;
Fig. 4 is a circuit diagram illustrating an example of a conventional low frequency transmission circuit; and
Fig. 5 is a circuit diagram illustrating a main portion of a conventional automatic recognition device.

### DESCRIPTION OF THE PREFERRED EMBODIMENT

Preferred embodiments of the present invention will now be described with reference to the accompanying drawings.

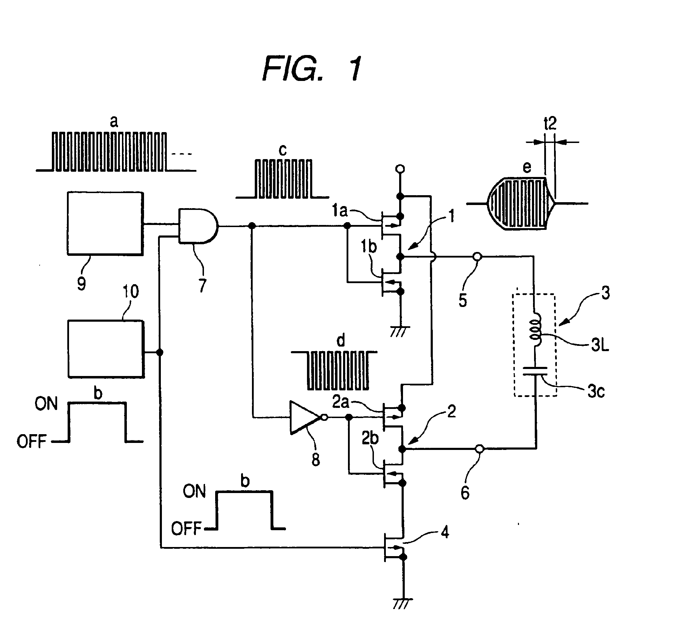

Fig. 1 is a circuit diagram illustrating an example of a low frequency transmission circuit used for a vehicle-mounted transceiver, which relates to the best mode for carrying out a passive keyless entry device, according to the present invention.

Referring to Fig. 1, the low frequency transmission circuit according to this embodiment includes a first half-bridge circuit 1 having a pair of FETs 1a and 1b having a drain-source path connected in series therebetween, with a source electrode of the FET 1a connected to a power supply terminal Vcc and with a source electrode of the FET 1b connected to a ground point, a second half-bridge circuit 2 having a pair of FETs 2a and 2b having a drain-source path connected in series therebetween, with a source electrode of the FET 2a connected to the power supply terminal Vcc and with a source electrode of the FET 2b connected to a drain electrode of a switching FET 4, which will be described later, a low frequency antenna 3 to form an LC resonance circuit by an inductor 3L and a capacitor 3C, which are connected between an output terminal 5 of the first half-bridge circuit 1 connected to a common drain electrode of the pair of FETs 1a and 1b and an output terminal 6 of the second half-bridge circuit 2 connected to a common drain electrode of the pair of FETs 2a and 2b, a switching FET 4 having its drain electrode connected to the source electrode of the FET 2b and its source electrode connected to the ground point, an AND gate 7 having its output terminal connected to a common gate electrode of the pair of FETs 1a and 1b, and an inverter 8 connected between a common gate electrode of the pair of FETs 2a and 2b and the output terminal of the AND gate 7.

The AND gate 7 has one input terminal connected to an output terminal of a clock signal (carrier signal composed of a rectangular wave) generating circuit 9 and the other input terminal connected to an output terminal of a control signal (modulation signal) generating circuit 10. Also, the switching FET 4 has its gate electrode connected to the output terminal of the control signal (modulation signal) generating circuit 10. In this case, the clock signal generating circuit 9 generates a clock signal (carrier signal) a having a frequency of 125 KHz and the control signal generating circuit 10 generates a control signal (modulation signal) b having two values of a positive polarity and a negative polarity of a frequency of several KHz.

Operation of the low frequency transmission circuit having the above-mentioned structure is as follows.

The clock signal generated by the clock signal generating circuit 9 is input to the one input terminal of the AND gate 7 and the control signal having the two values generated by the control signal generating circuit 10 is input to the other input terminal of the AND gate 7. In this case, the AND gate 7 outputs the clock signal when the control signal having the two values has the positive polarity, and an output of the clock signal from the AND gate 7 is blocked and a modulation signal c is outputted from the output terminal of the AND gate 7 when the control signal having the two values has the negative polarity. The modulation signal c is supplied to the first half-bridge circuit 1 via the common gate electrode of the pair of FETs 1a and 1b, and simultaneously, is supplied to an input terminal of the inverter 8. The inverter 8 inverts the polarity of the supplied modulation signal c and outputs an inverted modulation signal d through its output terminal. The inverted modulation signal d is supplied to the second half-bridge circuit 2 via the common gate electrode of the pair of FETs 2a and 2b. The first half-bridge circuit 1 amplifies the supplied modulation signal c and supplies the amplified modulation signal to one end of the low frequency antenna 3 via the output terminal 5. The second half-bridge circuit 2 amplifies the supplied inverted modulation signal d and supplies the amplified inverted modulation signal to the other end of the low frequency antenna 3 via the output terminal 6. The low frequency antenna 3 generates a bipolar modulation signal e by the modulation signal c and the inverted modulation signal d supplied to both ends of the low frequency antenna 3 and transmits a low frequency signal corresponding to the bipolar modulation signal e.

While the bipolar modulation signal e is supplied to the low frequency antenna 3, the switching FET 4 is turned on because the control signal having the two values supplied to its gate electrode has the positive polarity, and accordingly, the source electrode of the FET 2b of the second half-bridge circuit 2 is connected to the ground point. For this reason, the first half-bridge circuit 1 and the second half-bridge circuit 2 amplify the modulation signal c and the inverted modulation signal d with high gain, respectively, and the bipolar modulation signal e having large amplitude is supplied to the low frequency antenna 3. On the other hand, when the control signal having the two values has the negative polarity, the supply of the bipolar modulation signal e to the low frequency antenna 3 is stopped. However, at this time, since the polarity of the control signal having the two values supplied to the gate electrode of the switching FET 4 is changed to the negative polarity, the switching FET 4 is turned off to have high resistance, which is connected between the ground point and the source electrode of the FET 2b of the second half-bridge circuit 2. For this reason, Q of the LC resonance circuit including the low frequency antenna 3 is significantly lowered due to the connection of the high resistance and the residual oscillation energy of the clock signal frequency of the LC resonance circuit is greatly reduced. As a result, a transmission end point of time of the transmission signal is later by t2 than a transmission end point of time of the low frequency signal transmitted from the low frequency antenna 3, that is, a supply stop point of time of the control signal, and can be significantly shorter than t1 in the known symmetrical low frequency transmission circuit shown in Fig. 4.

In addition, when the transmission end point of time of the low frequency signal transmitted from the low frequency antenna 3 becomes significantly short, since an interval between a transmission end point of time of one transmission signal and a transmission start point of time of a next transmission signal can be clearly recognized, the transmission speed of the transmission signal is not lowered and the transmission efficiency of the transmission signal is not deteriorated.

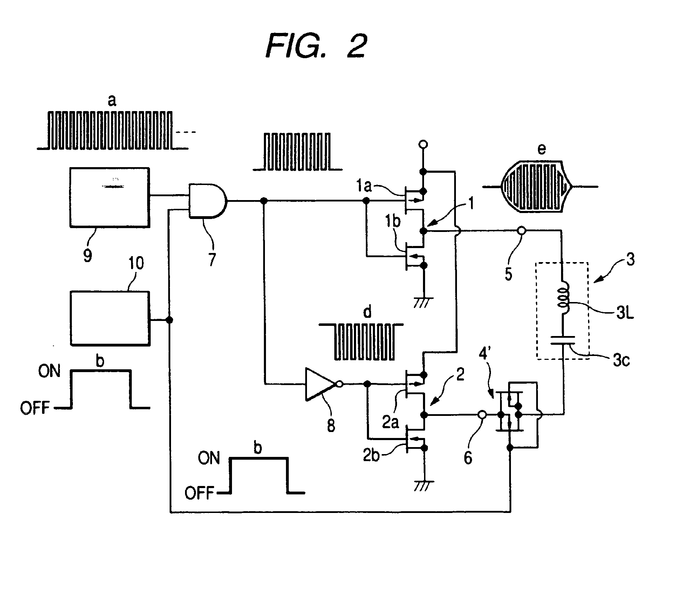

Fig. 2 is a circuit diagram illustrating a second embodiment of a low frequency transmission circuit used for a vehicle-mounted transceiver, which relates to another mode for carrying out a passive keyless entry device, according to the present invention.

The low frequency transmission circuit shown in Fig. 2 (hereinafter, referred to as " a second low frequency transmission circuit") is different in its configuration from the low frequency transmission circuit shown in Fig. 1 (hereinafter, referred to as " a first low frequency transmission circuit " ) in that the second low frequency transmission circuit is different in its connection location of the switching FET from the first low frequency transmission circuit, that is, while the switching FET 4 having its gate electrode input with the control signal having the two values is connected between the source electrode of the FET 2b of the second half-bridge circuit 2 and the ground point in the first low frequency transmission circuit, a switching FET 4' having its gate electrode input with the control signal having the two values is connected between the common drain electrode of the FETs 2a and 2b and one end of the antenna 3 (in this case, a terminal of the capacitor 3C where the inductor 3L are not connected) in the second low frequency transmission circuit. Except for this configuration, the configuration the second low frequency transmission circuit is the same as that of the first low frequency transmission circuit. Therefore, detailed explanation of other configuration of the second low frequency transmission circuit will be omitted for the sake of brevity.

In addition, operation of the second low frequency transmission circuit, including the switching operation of the switching FET 4', is the same as that of the first low frequency transmission circuit as described above, and also, an effect thereof is nearly the same as that achieved by the first low frequency transmission circuit. Therefore, detailed explanation of the operation and effect of the second low frequency transmission circuit will be also omitted for the sake of brevity.

In addition, although the switching FET 4' connected between the common drain electrode of the FETs 2a and 2b and one end of the antenna 3 has been exemplified in the second low frequency transmission circuit, it may be changed for the switching FET 4' to be connected between the common drain electrode of the FET 1a and 1b and the other end of the antenna 3 (in this case, a terminal of the inductor 3L where the capacitor 3C are not connected). That is, in an equivalent circuit for determining a value of Q of the antenna 3 (to determine whether the FET of the transmission circuit is open or mute), the inductor 3L and the capacitor 3C may be connected in series to the transmission path of the low frequency signal such that they are connected in series to the switching FET 4'.

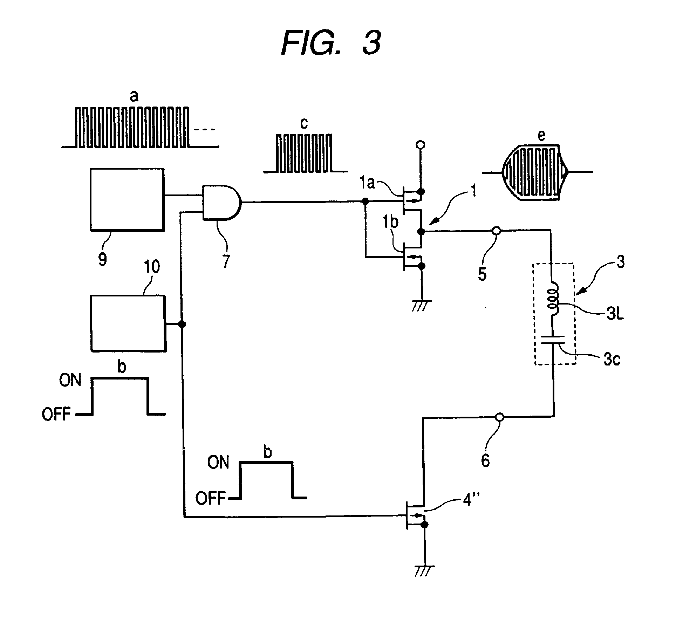

Fig. 3 is a circuit diagram illustrating a third embodiment of a low frequency transmission circuit used for a vehicle-mounted transceiver, which relates to yet another mode for carrying out a passive keyless entry device, according to the present invention.

The low frequency transmission circuit according to this embodiment shown in Fig. 3 (hereinafter, referred to as " a third low frequency transmission circuit " ) corresponds to a third embodiment of the present invention. The third low frequency transmission circuit is different in its configuration from the first low frequency transmission circuit in that the third low frequency transmission circuit uses only the first half-bridge circuit, one end of the antenna 3 is connected to the output terminal of the first half-bridge circuit, and a switching FET 4" is connected between the other end of the antenna 3 and the ground point, while the first low frequency transmission circuit uses the symmetrical low frequency transmission circuit composed of the first and second half-bridge circuits and the antenna 3 is connected between the output terminals of the first and second half-bridge circuits. Except for this configuration, the configuration the third low frequency transmission circuit is the same as that of the first low frequency transmission circuit.

In addition, operation of the first half-bridge circuit in the third low frequency transmission circuit is the same to that of the first half-bridge circuit in the first low frequency transmission circuit, and operation and effect of the switching FET 4" in the third low frequency transmission circuit are the same to those of the switching FET 4 in the first low frequency transmission circuit as described above. Therefore, detailed explanation of the configuration, operation and effect of the third low frequency transmission circuit will be omitted for the sake of brevity.

## Claims

1. A passive keyless entry device comprising a vehicle-mounted transceiver and a portable transceiver, which is adapted to operate vehicle-mounted devices of a vehicle in which the vehicle-mounted transceiver is installed, the vehicle-mounted transceiver transmitting a low frequency wakeup signal to the portable transceiver, the portable transceiver transmitting a high frequency command signal to control the vehicle-mounted devices in response to receipt of the wakeup signal, the vehicle-mounted transceiver receiving the command signal,
wherein the vehicle-mounted transceiver comprises a clock circuit for outputting a clock signal, a control circuit for outputting a control signal, a modulation circuit for modulating the clock signal with the control signal to produce a modulation signal, a transmission circuit driven by the modulation signal for supplying a low frequency signal to a low frequency antenna which forms an LC resonance circuit, and a switching FET having a gate electrode to which the control signal is supplied,
the transmission circuit is configured by a half-bridge circuit composed of a pair of FETs having a common gate electrode to which the modulation signal is input, and
the low frequency antenna is connected to an output terminal of the half-bridge circuit, **characterised in that** the switching FET is connected in serie to said LC-Resonance Circuit and is switched off when transmission of the low frequency signal is stopped as supply of the control signal is stopped.

2. The passive keyless entry device according to claim 1,
wherein the switching FET is connected between a ground connection electrode of the half-bridge circuit and a ground point.

3. The passive keyless entry device according to claim 1,
wherein the switching FET is connected between the output terminal of the half-bridge circuit and one end of the low frequency antenna connected to the output terminal.

4. The passive keyless entry device according to claim 1-3,
wherein another pair of FETs different from the pair of FETs is provided, an inverted modulation signal is input between the common gate electrode of the pair of FETs and a common gate electrode of another pair of FETs, and the low frequency antenna is connected between an output terminal of the pair of FETs and an output terminal of another pair of FETs.

## Patentansprüche

1. Passive schlüssellose Zugangsvorrichtung, aufweisend einen in einem Fahrzeug montierten Sender-Empfänger und einen tragbaren Sender-Empfänger, der für die Betätigung von im Fahrzeug montierten Vorrichtungen eines Fahrzeugs ausgebildet ist, in dem der im Fahrzeug montierte Sender-Empfänger installiert ist, wobei der im Fahrzeug montierte Sender-Empfänger ein Niedrigfrequenz-Wecksignal an den tragbaren Sender-Empfänger sendet, der tragbare Sender-Empfänger ein Hochfrequenzbefehlssignal sendet, um die im Fahrzeug montierten Vorrichtungen als Antwort auf den Empfang des Wecksignals zu steuern, der im Fahrzeug montierte Sender-Empfänger das Befehlssignal empfängt,
wobei der im Fahrzeug montierte Sender-Empfänger eine Taktgeberschaltung für das Ausgeben eines Taktsignals, eine Steuerschaltung für das Ausgeben eines Steuersignals, eine Modulationsschaltung für das Modulieren des Taktsignals mit dem Steuersignal, um ein Modulationssignal zu erzeugen, eine von dem Modulationssignal gesteuerte Sendeschaltung für das Liefern eines Niedrigfrequenzsignals an eine Niedrigfrequenzantenne, die eine LC- Resonanzschaltung bildet, und einen Schalt-FET mit einer Gate-Elektrode, an die das Steuersignal geliefert wird, aufweist,
wobei die Sendeschaltung mittels einer Halbbrückenschaltung konfiguriert ist, die aus einem Paar von FETs mit einer gemeinsamen Gate-Elektrode gebildet ist, der das Modulationssignal zugeführt wird, und
die Niedrigfrequenzantenne mit einem Ausgangsanschluss der Halbbrückenschaltung verbunden ist, **dadurch gekennzeichnet, dass** der Schalt-FET mit der LC-Resonanzschaltung in Reihe geschaltet ist und ausgeschaltet wird, wenn die Übertragung des Niedrigfrequenzsignals gestoppt wird, wenn das Liefern des Steuersignals gestoppt wird.

2. Passive schlüssellose Zugangsvorrichtung nach Anspruch 1,
wobei der Schalt-FET zwischen eine Masseverbindungselektrode der Halbbrückenschaltung und einen Massepunkt geschaltet ist.

3. Passive schlüssellose Zugangsvorrichtung nach Anspruch 1,
wobei der Schalt-FET zwischen den Ausgangsanschluss der Halbbrückenschaltung und ein Ende der Niedrigfrequenzantenne geschaltet ist, das mit dem Ausgangsanschluss verbunden ist.

4. Passive schlüssellose Zugangsvorrichtung nach Anspruch 1-3,
wobei ein weiteres Paar von FETs, das sich von dem Paar von FETs unterscheidet, vorgesehen ist, ein invertiertes Modulationssignal zwischen der gemeinsamen Gate-Elektrode des Paars von FETs und einer gemeinsamen Gate-Elektrode eines weiteren Paars von FETs zugeführt wird und die Niedrigfrequenzantenne zwischen einen Ausgangsanschluss des Paars von FETs und einen Ausgangsanschluss eines weiteren Paars von FETs geschaltet ist.

## Revendications

1. Dispositif passif d'entrée sans clé, comprenant un émetteur-récepteur embarqué et un émetteur-récepteur portatif, qui est adapté pour actionner des dispositifs embarqués d'un véhicule, dans lequel l'émetteur-récepteur embarqué est installé, l'émetteur-récepteur embarqué émettant un signal de réveil à basse fréquence à l'émetteur-récepteur portatif, l'émetteur-récepteur portatif émettant un signal de commande à haute fréquence pour commander les dispositifs embarqués en réponse à la réception du signal de réveil, l'émetteur-récepteur embarqué recevant le signal de commande,
dans lequel l'émetteur-récepteur embarqué comprend un circuit d'horloge permettant de fournir en sortie un signal d'horloge ; un circuit de commande, permettant de fournir en sortie un signal de commande ; un circuit de modulation, permettant de moduler le signal d'horloge avec le signal de commande, pour produire un signal de modulation ; un circuit d'émission, actionné par le signal de modulation, pour fournir un signal à basse fréquence à une antenne à basse fréquence, qui forme un circuit de résonance LC et un transistor à effet de champ de commutation, ayant une électrode de grille, à laquelle est fourni le signal de commande,
le circuit d'émission est configuré par un circuit en demi-pont, composé d'une paire de transistors à effet de champ ayant une électrode de grille commune, sur laquelle est entré le signal de modulation et
l'antenne à basse fréquence est reliée à une borne de sortie du circuit en demi-pont, **caractérisé en ce que** le transistor à effet de champ en commutation est relié en série audit circuit de résonance LC et est mis hors circuit quand l'émission du signal à basse fréquence est arrêtée pendant que la fourniture du signal de commande est arrêtée.

2. Dispositif passif d'entrée sans clé selon la revendication 1,
dans lequel le transistor à effet de champ en commutation est connecté entre une électrode de connexion de masse du circuit en demi-pont et un point de masse.

3. Dispositif passif d'entrée sans clé selon la revendication 1,
dans lequel le transistor à effet de champ en commutation est connecté entre la borne de sortie du circuit en demi-pont et une extrémité de l'antenne à basse fréquence, connectée à la borne de sortie.

4. Dispositif passif d'entrée sans clé selon les revendications 1 à 3,
dans lequel une autre paire de transistors à effet de champ, différente de la paire de transistors à effet de champ, est fournie ; un signal de modulation inversé est entré entre l'électrode de grille commune de la paire de transistors à effet de champ et une électrode de grille commune d'une autre paire de transistors à effet de champ et l'antenne à basse fréquence est connectée entre une borne de sortie de la paire de transistors à effet de champ et une borne de sortie d'une autre paire de transistors à effet de champ.
